**Europäisches Patentamt**

**European Patent Office**

**Office européen des brevets**

(11) Numéro de publication : **0 391 763 B1**

(12) **FASCICULE DE BREVET EUROPEEN**

(19)

(11) Numéro de publication : **0 391 763 B1**

(12) **FASCICULE DE BREVET EUROPEEN**

(45) Date de publication du fascicule du brevet :
**05.08.92 Bulletin 92/32**

(21) Numéro de dépôt : **90400778.8**

(22) Date de dépôt : **21.03.90**

(51) Int. Cl.⁵ : **B60J 10/00**

(54) **Procédé de recouvrement d'un joint par un tissu.**

(30) Priorité : **03.04.89 FR 8904855**

(43) Date de publication de la demande :
**10.10.90 Bulletin 90/41**

(45) Mention de la délivrance du brevet :
**05.08.92 Bulletin 92/32**

(84) Etats contractants désignés :
**DE GB IT**

(56) Documents cités :
**DE-C- 615 213**
**FR-A- 2 585 799**
**GB-A- 702 743**
**GB-A- 821 194**
**US-A- 4 396 221**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Paire, Michel**
**23, Villa de Moravie**
**F-35200 Rennes (FR)**
Inventeur : **Aminta, Alessandro**
**Lot Les Hubis**
**F-35160 Monterfil (FR)**

(74) Mandataire : **Boivin, Claude**
**9, rue Edouard-Charton**
**F-78000 Versailles (FR)**

EP 0 391 763 B1

## Description

Les joints d'entrée de porte de véhicule automobile comprennent généralement une partie en forme de gouttière, éventuellement munie de lèvres internes et propre à chausser une feuillure, une partie de forme tubulaire propre à s'écraser contre une paroi, et une partie en forme de lèvre externe faisant saillie à la base de la gouttière et propre à recouvrir l'extrémité d'un panneau.

Actuellement ces joints sont en caoutchouc noir ou teinté ou bien en matière plastique teintée ou revêtue d'un tissu teinté (Voir, par exemple, figure 11 de GB-A-702 743). La réalisation d'un joint en caoutchouc recouvert par un tissu pose jusqu'à présent des problèmes en particulier parce que le tissu ne peut être collé sur la partie tubulaire du joint à cause des phénomènes d'incompatibilité du caoutchouc et de l'adhésif; de plus l'ensemble du joint manque de souplesse et le tissu forme souvent des plis rigides dans les parties courbes du joint.

La présente invention a pour objet un procédé de recouvrement par une bande de tissu d'un joint d'étanchéité ou de parement pour entrée de porte de véhicule automobile, qui évite ces inconvénients.

Ce procédé est caractérisé en ce qu'on recouvre avec la bande les deux faces de la lèvre externe et la partie tubulaire du joint et qu'on procède à un piquage à l'une des extrémités de la bande de tissu sous la lèvre externe du joint le long d'une génératrice de ce joint et qu'on fait pénétrer le bord longitudinal libre de la bande de tissu à l'intérieur de la gouttière.

On a décrit ci-après, à titre d'exemple non limitatif, un mode de mise en oeuvre du procédé selon l'invention, avec référence au dessin annexé dans lequel :

La Figure 1 montre un pied milieu de véhicule automobile portant deux joints d'entrée de porte revêtus de tissu selon l'invention;

Les Figures 2 à 4 sont des vues en coupe du joint à trois étapes différentes de la mise en place du tissu.

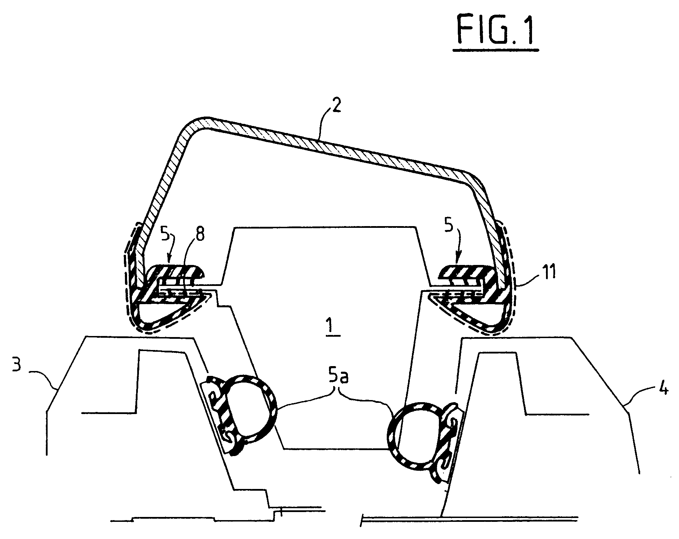

A la Figure 1, on voit un pied milieu 1 d'un véhicule automobile qui est recouvert intérieurement d'une garniture 2 et sur l'extérieur duquel s'appliquent une porte avant 3 et une porte arrière 4. L'étanchéité à l'entrée des portes est assurée par des joints extrudés désignés dans leur ensemble par la référence 5a.

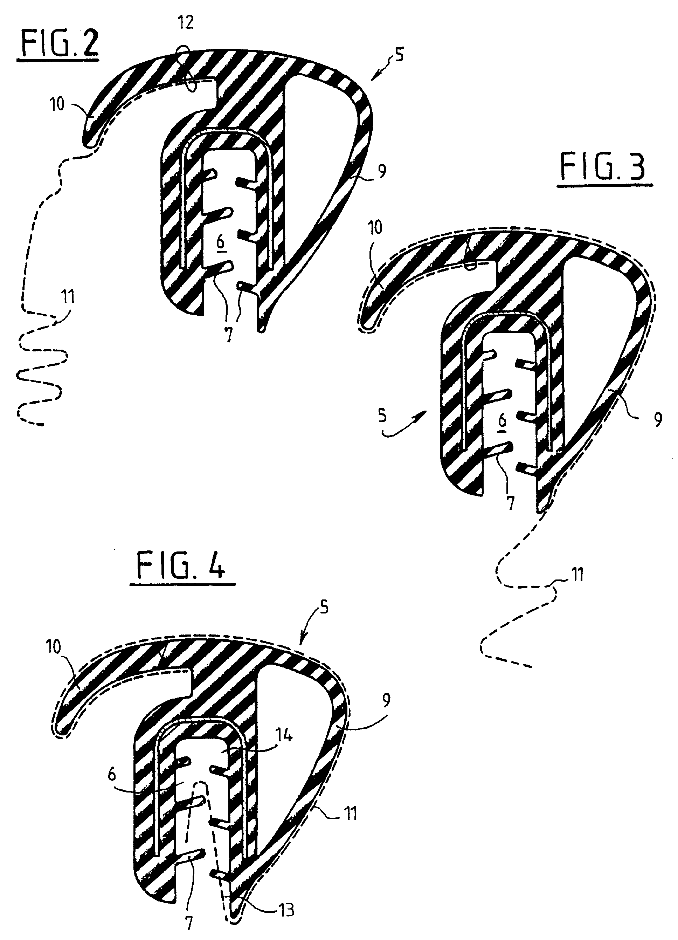

Comme on le voit plus particulièrement aux Figures 2 à 4, le joint de parement 5 comporte une gouttière 6 munie de lèvres internes 7 et propre à chausser une feuillure 8 du pied milieu 1, une partie de forme tubulaire 9 propre à être écrasée par la porte 3 ou 4, et une lèvre externe 10 propre à recouvrir l'extrémité de la garniture 2.

La partie tubulaire 9 du joint est en caoutchouc cellulaire et le restant du joint en caoutchouc compact Il est recouvert par un tissu jersey teinté 11 assorti au garnissage du véhicule, notamment à la garniture 2.

Pour recouvrir le joint 5 avec le tissu 11, on pique l'un des bords longitudinaux de la bande de tissu 11 sous la lèvre externe 10, au voisinage de son raccordement avec la base de la gouttière 6, comme indiqué en 12 à la Figure 2. On enrobe ensuite dans le tissu 11 l'ensemble du joint avec sa lèvre 10 dont les deux faces sont ainsi recouvertes et sa partie tubulaire 9 (Figure 3). Enfin, à l'aide d'une molette, on fait pénétrer le bord longitudinal libre de la bande 11 à l'intérieur de la gouttière 7, dans laquelle elle est pincée par les lèvres internes 7 (Figure 4). Si on l'estime nécessaire, on peut coller ce bord longitudinal à l'intérieur de la gouttière, par exemple aux endroits 13 et 14, à l'aide d'une colle du type cyanoacrylate, d'un adhésif permanent ou d'un hot melt souple.

Le procédé qui vient d'être décrit peut être mis en oeuvre sur une machine automatique qui assure successivement les trois opérations et éventuellement la pose de colle ou d'adhésif. Il est rapide et peu onéreux; il ne nécessite pas de traitement spécial du tissu et permet la réalisation de joints ne se plissant pas à la pose ou dans ses parties courbes.

## Revendications

1. Procédé de recouvrement à l'aide d'une bande de tissu d'un joint d'étanchéité ou de parement pour entrée de porte de véhicule automobile, comprenant une partie (6) en forme de gouttière, propre à chausser une feuillure, une partie de forme tubulaire (9) propre à s'écraser contre une paroi (3, 4), et une partie en forme de lèvre externe (10) faisant saillie à la base de la gouttière et propre à recouvrir l'extrémité d'un panneau (2), caractérisé en ce qu'on recouvre avec la bande (11) les deux faces de la lèvre externe (10) et la partie tubulaire du joint (9) et qu'on procède à un piquage à l'une des extrémités de la bande de tissu (11) sous la lèvre externe (10) du joint le long d'une génératrice de ce joint et qu'on fait pénétrer le bord longitudinal libre de la bande de tissu (11) à l'intérieur de la gouttière (6).

2. Procédé selon la revendication 1, caractérisé en ce qu'on pique ledit bord d'extrémité de la bande de tissu (11) au voisinage du raccordement de la lèvre externe (10) avec la gouttière (6).

3. Procédé selon la revendication 1 ou 2, caractérisé en ce qu'on colle le bord libre à l'intérieur de la gouttière (6).

4. Joint d'étanchéité extrudé revêtu d'une bande de tissu d'après le procédé selon l'une des revendications 1 à 3.

**Patentansprüche**

1. Verfahren zum Überziehen einer Dichtung oder einer Verkleidung für eine Automobiltür mit einem Gewebestreifen, bestehend aus einer Ablaufrinne (6) zur Umschließung eines Falzes, sowie aus einem rohrförmigen Teil (9), der gegen eine Wandung (3, 4) gedrückt wird, und einem lippenförmigen Außenteil (10), der am Ansatz der Ablaufrinne vorspringt und das Ende einer Blende (10) abdeckt, dadurch gekennzeichnet, daß mit dem Gewebestreifen (11) beide Seiten der Außenlippe (10) und der rohrförmige Teil der Dichtung (9) überzogen werden, einer der beiden Ränder des Gewebestreifens (11) unter der Außenlippe (10) der Dichtung entlang der Mantellinie dieser Dichtung angeheftet und der freie Längsrand des Gewebestreifens (11) in die Ablaufrinne (6) eingeführt wird.

2. Verfahren nach Patentanspruch 1, dadurch gekennzeichnet, daß der besagte Rand des Gewebestreifens (11) in der Nähe der Verbindung zwischen Außenlippe (10) und Ablaufrinne (6) angeheftet wird.

3. Verfahren nach Patentanspruch 1 oder 2, dadurch gekennzeichnet, daß der freie Rand des Gewebesttreifens im Inneren der Ablaufrinne (6) angeklebt wird.

4. Stranggepreßte Dichtung mit einem nach dem in den Patentansprüchen 1 bis 3 beschriebenen Verfahren hergestellten Gewebeüberzug.

**Claims**

1. Method for covering a sealing or facing joint with a strip of fabric for a motor vehicle door entrance including one gutter-shaped portion (6) able to fit a rabbet, one tubular-shaped portion (9) able to be crushed against a wall (34), and one external lip-shaped portion (10) projecting to the base of the gutter and able to cover the extremity of a panel (2), wherein the two faces of the external lip (10) and the tubular portion of the sealing (9) are covered with the strip (11) and wherein one of the extremities of the fabric strip (11) is stitched under the external lip (10) of the sealing along one generating line of this sealing and wherein the free longitudinal edge of the fabric strip (11) is made to penetrate into the gutter (6).

2. Method according to claim 1, wherein said extremity edge of the fabric strip (11) is stitched close to the jointing of the external lip (10) with the gutter (6).

3. Method according to claim 1 or 2, wherein the free edge is glued inside the gutter (6).

4. Extruded sealing covered with a fabric strip in accordance with the method conforming to any one of claims 1 to 3.

# FIG.1

FIG.2

FIG.3

FIG. 4